# EUROPÄISCHE PATENTSCHRIFT

(11) **EP 0 335 000 B1**
(45) Veröffentlichungstag und Bekanntmachung des Hinweises auf die Patenterteilung: **12.05.1993**
(21) Anmeldenummer: 88119164.7
(22) Anmeldetag: 18.11.1988
(51) Int. Cl.: F16J 15/32

(54) **Ringdichtung**
Ring sealing
Joint torique

(30) Priorität: 30.03.1988 DE 3810741
(43) Veröffentlichungstag der Anmeldung: 04.10.1989
(73) Patentinhaber: Firma Carl Freudenberg, 69469 Weinheim (DE)
(72) Erfinder: Vogt, Rolf, D-6836 Oftersheim (DE); Spies, Karl Heinrich, Dr., D-6943 Birkenau (DE); Kilthau, Gerhard, Dr., D-6800 Mannheim 51 (DE)

(56) Entgegenhaltungen:
- DE-A- 2 108 341
- US-A- 4 573 690
- K. TRUTNOVSKY: "Berührungsdichtungen", 2. Auflage, 1975, Seiten 192-193, Springer Verlag, Berlin, DE

## Beschreibung

Die Erfindung betrifft eine Ringdichtung, umfassend eine innenliegende Zylinderfläche mit dem Außendurchmesser DA und darin eingreifenden Eintiefungen sowie eine mit einer elastischen Vorspannung an die Zylinderfläche angepreßte, ringförmig ausgebildete Dichtlippe aus polymerem Werkstoff.

Eine Ringdichtung dieser Art ist z.B. aus der US-A-4573690 bekannt. Die dabei der Dichtlippe gegenüberliegende Zylinderfläche weist in sie eingreifende Eintiefungen auf, welche durch sich parallel zueinander erstreckende Riefen oder Rillen gebildet werden. Diese entstehen bei der mechanischen Bearbeitung der Zylinderfläche, beispielsweise beim Überschleifen derselben, und können Einfluß auf das mit der Ringdichtung erzielte Abdichtungsergebnis nehmen. Das ist in einer besonders gravierenden Weise dann der Fall, wenn die Ringdichtung in bezug auf die Abdichtung eines relativ verdrehbaren Maschinenteiles zur Anwendung gelangt, beispielsweise bei einer Welle. Es ergeben sich dann nämlich infolge an sich bekannter, hydrodynamischer Effekte axiale Förderwirkungen innerhalb des Dichtspaltes, welche entweder eine Verschlechterung oder eine Verbesserung des Abdichtungsergebnisses bewirken. Im allgemeinen ist man bestrebt, eine Verbesserung des Abdichtungsergebnisses zu erzielen. Man ist deshalb dazu übergegangen, die Neigung der einzelnen Riefen bzw. Rillen zur Achse der Zylinderfläche derart festzulegen, daß sich während der bestimmungsgemäßen Verwendung eine in den abzudichtenden Raum weisende Förderwirkung in dem Dichtspalt ergibt. Diese tritt indessen mit zunehmender Wellendrehzahl zunehmend stärker in Erscheinung, was schließlich bei sehr hohen Wellendrehzahlen dazu führen kann, daß die Menge des in dem Dichtspalt verfügbaren, abzudichtenden Mediums zu gering ist in bezug auf die dort erforderliche Schmierung und Kühlung der Dichtlippe. Ein vorzeitiger Ausfall der Dichtung ist hiervon die zwangsläufige Folge.

Aus der DE-A-21 08 341 ist ein Verfahren zur Oberflächenbehandlung von metallischen Gleitflächen bekannt, bei dem die während ihrer bestimmungsgemäßen Verwendung zusammenwirkenden Gleitflächen ganz oder partiell nach ihrer Feinbearbeitung glaskugelgestrahlt werden, um eine Oberflächenstruktur mit einer guten Haftung eines Ölfilmes auf diesen Oberflächen im Einlauf- und im Betriebszustand zu erreichen. Die Werte der zulässigen Gleitgeschwindigkeiten lassen sich hierdurch erhöhen, und die von den Glaskugeln erzeugten, kugelkalottenförmigen Eindrückungen können einander so dicht benachbart sein, daß sie einander berühren oder überdecken. Eine Verwendung des Glaskugelstrahlens in bezug auf die Erzeugung von Dichtungen ist in der genannten Druckschrift nicht erwähnt.

Der Erfindung liegt die Aufgabe zugrunde, eine Ringdichtung zur Verwendung im Bereich von Wellen zu entwickeln, die sich bei sehr hohen Gleitgeschwindigkeiten von mehr als 20 m/sec durch eine wesentlich verbesserte Gebrauchsdauer von den bisher bekannten unterscheidet.

Diese Aufgabe wird erfindungsgemäß bei einer Ringdichtung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Ringdichtung sind die Eintiefungen kalottenförmig ausgebildet mit einer maximalen Tiefe von 4 bis 12 Micrometer, bezogen auf den Außendurchmesser der Zylinderfläche, wobei im wesentlichen jede Eintiefung im Bereich ihres gesamten Außenumfanges von benachbarten Eintiefungen umschlossen ist und wobei die Mittelpunktsabstände benachbarter Eintiefungen so bemessen sind, daß die Eintiefungen einander in Schnittkanten begrenzen. Die Mittelpunktsabstände der am dichtesten benachbarten Eintiefungen sind gering und überschreiten, statistisch gesehen, nicht einen Mittelwert von 0,1 mm. Überraschenderweise wird hierdurch ein ausgezeichnetes Abdichtungsergebnis sowohl bei Wellenstillstand als auch bei sich drehender Welle erzielt. Selbst bei höchsten Wellendrehzahlen ist ein "Trockenlaufen" der Dichtlippe nicht mehr zu befürchten und hinsichtlich der Wärmeabführung und dem Dichtspalt ergeben sich durch die vergrößerte Kontaktfläche der Zylinderfläche deutlich verbesserte Bedingungen. Die Gebrauchsdauer ist dadurch wesentlich verlängert.

Die Eintiefungen haben zweckmäßig eine maximale Tiefe von 4 bis 9 Micrometer, bezogen auf DA. In Verbindung mit den üblicherweise zur Herstellung von Dichtlippen verwendeten, polymeren Werkstoffen wird insbesondere im angegebenen Bereich ein gutes Abdichtungsergebnis erzielt. Als Dichtungswerkstoff kommen neben den verschiedenen elastomeren Werkstoffen insbesondere solche aus PTFE und Polyamid in Betracht.

Nach der Erfindung ist es vorgesehen, daß die in irgendeiner Richtung der Zylinderfläche stetig aufeinanderfolgenden Eintiefungen insgesamt ein reliefartiges Profil haben, das gemeinsam mit einer gedachten Mittellinie positive und negative Differenzflächen einschließt, die in ihrer Gesamtheit von übereinstimmender Größe sind, wobei die integrierten Maximalabweichungen der tiefsten und der höchsten Stellen aller Eintiefungen von der Mittellinie kleiner sind als 1,5 Micrometer, vorteilhaft kleiner als 1,0 Micrometer. Statistisch gesehen zeichnet sich ein entsprechendes Profil durch eine außerordentlich große Gleichmäßigkeit aus. Sowohl im statisch ruhenden Zustand als auch bei drehender Welle wird hierdurch ein besonders gutes Abdichtungsergebnis erzielt.

Die Eintiefungen können solche mit voneinander abweichenden Wölbungsradien umfassen, was sich als besonders vorteilhaft erwiesen hat im Hinblick auf die Vermeidung unerwünschter Fördereffekte. Ihre Profile durchschneiden einander an den Schnittkanten zweckmäßig im wesentlichen unter einem Winkel von 90 bis 135 Grad.

Die einzelnen Eintiefungen sind in der Zylinderfläche zweckmäßig statistisch verteilt, d.h. einander in einer zufallsorientierten Weise zugeordnet. In bezug auf die sich bei drehender Welle ergebende, geradlinige Relativbewegung der Dichtlippe in Umfangsrichtung resultiert daraus innerhalb des Dichtspaltes eine Schleppströmung, deren Richtung an den überschrittenen Schnittkanten stetig wechselt und die eine intensive Umwälzung des in den Eintiefungen enthaltenen, abzudichtenden Mediums verursacht. Reibungsbedingte Überhitzungen desselben werden dadurch zuverlässig vermieden.

Die Eintiefungen lassen sich in der Zylinderfläche durch ein Bestrahlen mit Glas- oder Stahlkugeln erzeugen. Hierbei ergibt sich zugleich eine Kaltverfestigung der Oberfläche, was deren mechanische Widerstandsfähigkeit merklich verbessert. Eine entsprechende Kugelstrahlbehandlung läßt sich auf eine besonders wirtschaftliche Weise durchführen. Sie kann daher problemlos in der Groß-Serienproduktion eingesetzt werden.

Des weiteren ist es von wesentlichem Vorteil, daß sich durch eine entsprechende Kugelstrahlbehandlung der Zylinderfläche störende Oberflächenunregelmäßigkeiten derselben beseitigen lassen, beispielsweise Riefen, die während einer vorausgegangenen, spanabhebenden oder spanlosen Verformung derselben entstanden sind. Das Kugelbestrahlen empfiehlt sich daher beispielsweise als eine besonders kostengünstig durchführbare Nachbehandlung für vorausgehend feingeschliffene Oberflächen von Wellen oder für die Oberflächen der tiefgezogenen Ringe von Kassettendichtungen. Die axiale Ausdehnung entsprechend erzeugter Flächen braucht dabei die Laufspurbreite der Dichtlippe aus polymerem Werkstoff nicht in nennenswertem Maße zu überschreiten. Im allgemeinen genügt eine axiale Ausdehnung, die die axiale Anlagefläche der Dichtlippe beiderseits um etwa 1,5 mm überschreitet. Innerhalb der behandelten Fläche ergibt sich eine richtungsneutrale Benetzbarkeit.

Die mit den kalottenförmigen Eintiefungen versehene Zylinderfläche der erfindungsgemäßen Ringdichtung zeichnet sich in dichtungstechnischer Hinsicht durch eine große Unempfindlichkeit aus im Hinblick auf nachträgliche Beschädigungen. Selbst tiefe Kratzer, die bei den bekannten Ringdichtungen mit glatter Zylinderfläche eine sofortige Undichtigkeit zur Folge haben, führen bei der erfindungsgemäßen Ausführung nicht zu einer merklichen Veränderung des Abdichtungsverhaltens. Die fertiggestellten Zylinderflächen der erfindungsgemäßen Ringdichtung bedürfen daher während der Lagerung und des Transportes der entsprechenden Teile keines besonderen Schutzes. Auch hierdurch lassen sich wesentliche Einsparungen erzielen.

Der Gegenstand der vorliegenden Erfindung wird nachfolgend anhand der beigefügten Zeichnung weiter erläutert.

Es zeigen:
- Figur 1: Eine Ringdichtung der erfindungsgemäßen Art in halbgeschnittener Darstellung.
- Figur 2: Einen Ausschnitt der in Figur 1 gezeigten Ringdichtung in vergrößerter Wiedergabe.
- Figur 3: Die fotografische Wiedergabe einer beispielhaften Zylinderfläche der erfindungsgemäßen Ringdichtung.
- Figur 4: Einen Profilschnitt durch eine Zylinderfläche der erfindungsgemäßen Ringdichtung, bei dem die Einzelheiten aus Gründen der Anschaulichkeit in stark vergrößertem Maßstab wiedergegeben worden sind.

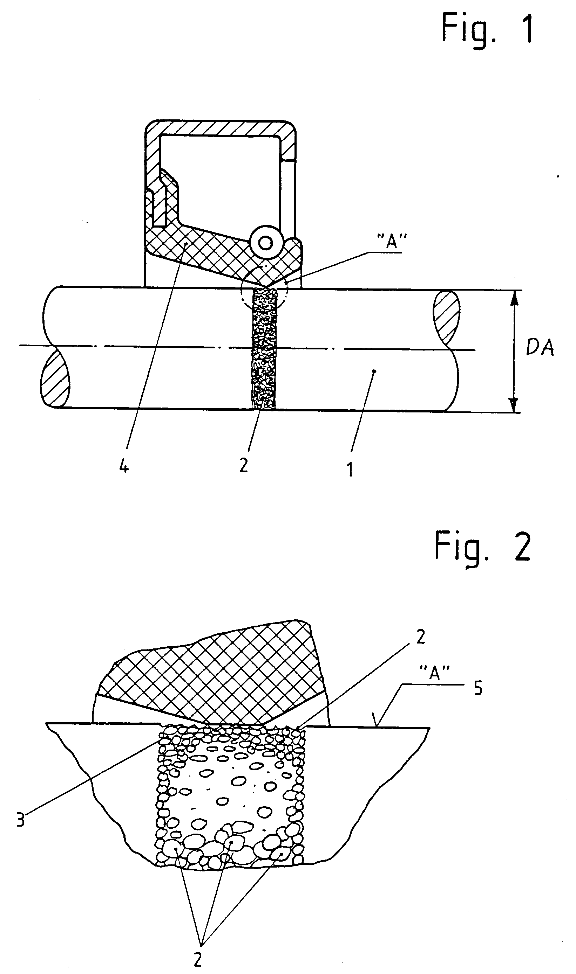

Die in Figur 1 gezeigte Ringdichtung umfaßt einen Radialwellendichtring üblicher Bauart, der während seiner bestimmungsgemäßen Verwendung gezeigt ist und die abzudichtende Welle mit der Dichtkante der Dichtlippe 4 berührt. Die Dichtkante wird dabei durch die Kraft einer außenseitig angebrachten Ringwendelfeder an die Oberfläche der abzudichtenden Welle 1 angepreßt. Diese hat den Außendurchmesser DA.

Im Bereich der Laufspur der Dichtkante ist die Zylinderfläche mit kalottenförmig ausgebildete Eintiefungen 2 versehen. Die Tiefe dieser Eintiefungen beträgt 4 bis 6 Micrometer, bezogen auf DA, wobei im wesentlichen jede Eintiefung zwei im Bereich ihres gesamten Außenumfanges von benachbarten Eintiefungen 2 umschlossen ist und wobei die benachbarten Eintiefungen 2 einander in Schnittkanten 3 begrenzen. Es ergibt sich im Bereich der einander berührenden Zonen der Dichtkante und der Zylinderfläche das in Figur 2 gezeigte Bild. Dieses ist dadurch gekennzeichnet, daß der durch die Andrückung der Ringwendelfeder in einem gewissen Bereich flachgedrückten Dichtkante der aus polymerem Werkstoff bestehenden Dichtlippe 4 die Schnittkanten 3 der einander begrenzenden Eintiefungen der Zylinderfläche 5 gegenüber liegen. Die Eintiefungen sind dabei unter normalen Betriebsbedingungen, d.h. in bezug auf die Abdichtung eines flüssigen Mediums, mit demselben gefüllt, was offenbar bei drehender Welle dazu führt, daß die Dichtkante der Dichtlippe 4 bei drehender Welle geringfügig von der Zylinderfläche 5 abgehoben und das abzudichtende Medium zugleich in den Eintiefungen und dem Dichtspalt in sich selbst umgewälzt wird. Selbst bei höchsten Drehzahlen treten keinerlei Schmierprobleme auf.

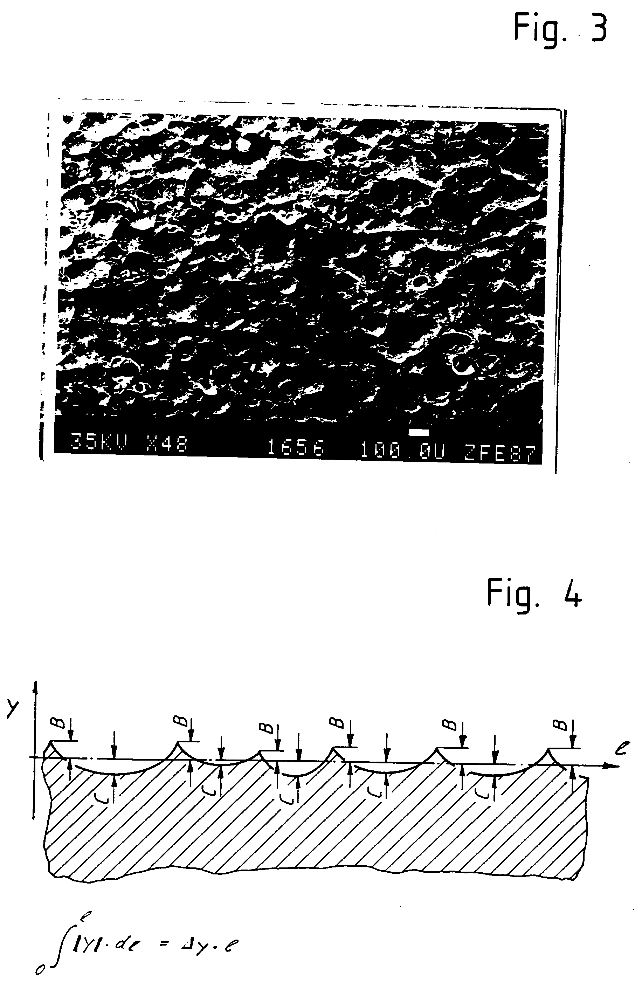

In Figur 3 ist eine beispielhafte Ausführung einer gebrauchssfertigen Zylinderfläche in vergrößertem Maßstab wiedergegeben. Es ist deutlich zu erkennen, daß die Eintiefungen kalottenförmig ausgebildet sind, die im Bereich ihres gesamten Außenumfanges von benachbarten Eintiefungen umschlossen sind, wobei die benachbarten Eintiefungen einander in Schnittkanten begrenzen. Hierdurch ergibt sich eine völlig unregelmäßige Oberflächenstruktur. Dennoch wird unter Verwendung einer entsprechend gestalteten Zylinderfläche ein ausgezeichnetes Abdichtungsergebnis sowohl bei stillstehender als auch bei sich drehender Welle erzielt.

Figur 4 zeigt ein beispielhaftes Relief durch eine gebrauchsfertige Zylinderfläche der erfindungsgemäßen Ringdichtung. Dabei ist zu ersehen, daß die aufeinanderfolgenden Eintiefungen insgesamt ein Profil haben, das gemeinsam mit einer gedachten Mittellinie positive und negative Differenzflächen einschließt, die in ihrer Gesamtheit von übereinstimmender Größe sind, wobei die integrierten Maximalabweichungen der tiefsten und der höchsten Stellen aller Eintiefungen von der Mittellinie kleiner sind als 1,0 Micrometer.

## Patentansprüche

1. Ringdichtung, umfasssend eine innenliegende Zylinderfläche mit dem Außendurchmesser DA und darin eingreifenden Eintiefungen sowie eine mit einer elastischen Vorspannung an die Zylinderfläche angepreßte, ringförmig ausgebildete Dichtlippe (4) aus polymerem Werkstoff, dadurch gekennzeichnet, daß die Eintiefungen (2) kalottenförmig ausgebildet sind und eine maximale Tiefe von 4 bis 12 Micrometer aufweisen, bezogen auf den Außendurchmesser DA, daß im wesentlichen jede Eintiefung (2) im Bereich ihres gesamten Außenumfanges von benachbarten Eintiefungen (2) umschlossen ist, daß die Mittelpunktsabstände benachbarter Eintiefungen (2) so gering bemessen sind, daß die Eintiefungen einander in Schnittkanten (3) begrenzen, daß die in irgendeiner Richtung stetig aufeinanderfolgenden Eintiefungen (2) insgesamt ein reliefartiges Profil haben, das gemeinsam mit einer gedachten Mittellinie positive und negative Differenzflächen einschließt, die in ihrer Gesamtheit von übereinstimmender Größe sind, und daß die integrierten Maximalabweichungen der tiefsten und der höchsten Stellen aller Eintiefungen (2) von der Mittellinie kleiner sind als 1,5 Micrometer.

2. Ringdichtung nach Anspruch 1, dadurch gekennzeichnet, daß die Eintiefungen (2) eine maximale Tiefe von 4 bis 9 Micrometer haben.

3. Ringdichtung nach Anspruch 1, dadurch gekennzeichnet, daß die integrierten Maximalabweichungen der tiefsten und der höchsten Stellen aller Eintiefungen (2) von der Mittellinie kleiner sind als 1,0 Micrometer.

4. Ringdichtung nach Anspruch 1 bis 3, dadurch gekennzeichnet, daß die Eintiefungen (2) solche mit voneinander abweichenden Wölbungsradien umfassen.

5. Ringdichtung nach Anspruch 1 bis 4, dadurch gekennzeichnet, daß die Eintiefungen (2) einander an den Schnittkanten im wesentlichen unter einem Winkel von 90 bis 135 Grad schneiden.

## Claims

1. An annular seal comprising an inner cylindrical surface of outside diameter DA having depressions indented therein and also comprising a sealing lip (4) which is of annular construction, is made of polymer material and is pressed with an elastic prestress against the cylindrical surface, characterised in that the depressions (2) are cap-shaped and have a maximum depth of 4 to 12 micrometres, relative to the outside diameter DA, in that substantially every depression (2) is surrounded in the region of its entire outside circumference by adjacent depressions (2), in that the spacings of the centre-points of adjacent depressions (2) are dimensioned to be so small that the depressions bound one another in intersecting edges (3), in that the depressions (2), which continuously follow on from one another in any direction, have in total a relief-type profile which together with an imaginary centre-line encloses positive and negative difference areas which are of matching size in their entirety, and in that the integrated maximum deviations of the lowest and highest points of all the depressions (2) from the centre-line are less than 1.5 micrometres.

2. An annular seal according to claim 1, characterised in that the depressions (2) have a maximum depth of 4 to 9 micrometres.

3. An annular seal according to claim 1, characterised in that the integrated maximum deviations of the lowest and highest points of all the depressions (2) from the centre-line are less than 1.0 micrometre.

4. An annular seal according to any of claims 1 to 3, characterised in that the depressions (2) comprise those having mutually deviating radii of curvature.

5. An annular seal according to any of claims 1 to 4, characterised in that the depressions (2) intersect one another at the intersecting edges substantially at an angle of 90 to 135 degrees.

## Revendications

1. Joint torique, comportant une surface cylindrique intérieure ayant le diamètre extérieur DA et dans laquelle s'accrochent des creux, ainsi qu'une lèvre d'étanchéité (4), formée d'un matériau polymère, pourvue d'une forme annulaire et appliquée par une précontrainte élastique contre la surface cylindrique, caractérisé en ce que les creux (2) sont agencés en forme de calottes et ont une profondeur maximale de 4 à 12 microns, en relation avec le diamètre extérieur DA, en ce que dans l'essentiel chaque creux (2) est entouré, dans toute la zone de son pourtour extérieur par des creux adjacents (2), en ce que les espacements de centre-à-centre de creux adjacents (2) ont des dimensions si petites que les creux se délimitent mutuellement par des arêtes de coupe (3), en ce que les creux (2) qui se succèdent en continu dans une direction quelconque ont dans l'ensemble un profil en forme de relief, qui comprend des surfaces différentielles positives et négatives par rapport à une ligne centrale imaginaire et qui ont dans leur ensemble des grandeurs en concordance, et en ce que les écarts maximaux intégrés des zones les plus basses et des zones les plus hautes de tous les creux (2) par rapport à la ligne centrale sont plus petits que 1,5 micron.

2. Joint torique selon la revendication 1, caractérisé en ce que les creux (2) ont une profondeur maximale de 4 à 9 microns.

3. Joint torique selon la revendication 1, caractérisé en ce que les écarts maximaux intégrés des zones les plus basses et des zones les plus hautes de tous les creux (2) par rapport à la ligne centrale sont plus petits que 1,0 micron.

4. Joint torique selon une des revendications 1 à 3, caractérisé en ce que les creux (2) comprennent des creux ayant des rayons de courbure qui sont différents les uns des autres.

5. Joint torique selon une des revendications 1 à 4, caractérisé en ce que les creux (2) se coupent mutuellement sur les arêtes de coupe dans l'essentiel en faisant un angle de 90 à 135 degrés.
